# EUROPEAN PATENT APPLICATION

(11) **EP 1 310 356 A1**
(43) Date of publication of application: **14.05.2003**
(21) Application number: 01126408.2
(22) Date of filing: 07.11.2001
(51) Int. Cl.: B32B 3/26, B32B 27/32, B32B 27/20, B29D 9/00, B29C 55/14, C08K 3/26, C08L 23/12

(54) **Manufacturing method for improving the yield and production of biaxial-oriented polypropylene pearly synthetic paper**

(71) Applicant: NAN YA PLASTICS CORP., Taipei (TW)
(72) Inventor: Lin, Allen Fong-Chin, Taipei (TW)
(74) Representative: Helms, Joachim, Dipl.-Ing. Patentanwalt

(57) **Abstract**

The key technique of the present invention on the achievement of improving the yield and production rate of the pearly synthetic paper is to prefabricate the inorganic powder into a master-batch (M₁B) with 0.1 ∼ 10µm diameter in the manufacturing process of the pearly synthetic paper; in addition, the inorganic powder is merely blended with polypropylene (primary raw material) to reach the required dispersion in advance; the present invention improves the problem of manufacturing process of conventional pearly synthetic paper of which the extruded sheet from the extruder has pores and air spots structure caused by the moist inorganic powder or the heat-volatilized gas produced from the surface treatment agent which would otherwise affect the product quality, the yield and production rate.

Consequently, while the extruder is being operated under a status of the maximum rotating speed and the maximum extrusion output, the inorganic powder master-batch (M₁B) of the present invention which has in advance fulfilled the dispersion requirement is able to effectively improve, incorporated with a desing of air-drawing device and an increased blending effect of a double-screw, the yield and production rate of the biaxial-oriented polypropylene pearly synthetic paper.

## Description

### BACKGROUND OF THE PRESENT INVENTION

### 1. Field of the Present Invention

The present invention relates to a manufacturing method for improving the yield and production rate of a pearly synthetic paper which key technique is to prefabricate the inorganic powder into a master-batch (M₁B) merely blended with polypropylene (primary raw material) to reach the required dispersion in advance to prevent pearly synthetic paper from having pores and air spots structure caused by the moist inorganic powder.

### 2. Description of Prior Art

In the last century, the paper industry keeps improving the manufacturing process research and equipment performance, the yield of the papermaking machine can reach, up to the present time, above 500 Ton/Day, the production rate can reach above 800 M/Min, and the production width can reach above 5 M. In addition, since factors such as the operation being almost fully automatic and the yield ratio reaching about 100 % (due to the water content of paper pulp being about 10 % and that of paper being about 7 % and almost no loss during manufacturing) and developing countries' non-properly cutting trees to provide paper pulp and developed countries' providing low price paper pulp by economic scale, the cultural paper mainly uses papers made of natural material in terms of cost.

Nevertheless, in terms of the need of long-term preservation and water proof, the natural paper product needs to be compound-processed with plastic material, for example, book skins, hand bags, propaganda posters, labels, etc. The natural paper product having been compound-processed with plastic material can not be recycled but treated as a waste. Meanwhile, the consumption of paper pulp made of woods could cause mass logging to damage the ecology; when the situation is out of control, the greenhouse effect and the saint infant effect will prevail to cause catastrophe like abnormal climate, drought, and flood that mankind can not remedy.

Currently, developed countries have a common consent on the environmental protection of the whole world; however, these countries are those that consume the natural paper product the most mainly due to economic reason that the natural paper is presently the cheapest one for cultural paper. On the other hand, the synthetic paper product, of which the plastic raw material is obtained by oil cracking and polymerization, has advantages of less pollution to the environment both in obtaining the raw material and in manufacturing process; besides, the synthetic paper product of high price has functions of water proof and duration, also the product can be used repeatedly for several times which relatively lowers the cost and the consumption of the natural environmental resources. Nevertheless, the application of synthetic paper is limited due to economic reason.

In the last ten years, the applicant keeps investing capital and human resource on the research of innovatory technique of synthetic paper to replace the natural paper product for culture paper as a goal. Therefore, the applicant has been awarded Taiwan Patent No. 93725, No. 72218, No. 81707, No. 96548, No. 121111 and other patents of Japan, USA, People's Republic of China.the applicant has promoted to replace the natural paper product with the compound-processed product of natural paper and plastic due to its accessible cost structure. In terms of cost, worldwide companies like Japan YUPO Inc., France POLYART Synthetic Paper Inc., US Dupont Inc. (TYVEK synthetic paper) still have not been able to reach an acceptable cost structure.

Nevertheless, as aforementioned, the cost structure is the most significant factor to decide whether or not the product can be applied to culture paper, and the other factor is the printable property and post-processing of the product such as folding and bookbinding. At present, the price of pulp is US$ 350/Ton and the output is beyond 5000 Ton/Day; the price of polypropylene is beyond US$ 600 and the output of pearly synthetic paper equipment is 70 Ton/Day. In terms of price and output, it seems that pearly synthetic paper can not compete with nature paper product. As a matter of fact, the cost is also affected by the following factors:
1. The investment of equipment contributes to the product cost.
   The investment of papermaking machine including the peripheral devices and waste treatment facility is about US$ 87 million/set; thus the investment of pearly synthetic paper production equipment including the peripheral devices is about US$ 46.5 million/set ∼ US$ 52.3 million/set;
2. The factor of worldwide environmental protection affects the cost difference between pulp and polypropylene.

Therefore, the most important subject to strive for is to increase the yield and production rate in order to improve the production efficiency, thereby to decrease the cost.

The significance of improving the yield of the present invention is to increase the productivity of the extruder by using the method of the present invention, i.e., to increase the rotation speed or the scale of the extruder in order to reach an efficient production. The granted patents of the applicant such as US Patent No. 5,552,011 and No. 6,001,290 disclose a manufacturing method by 3-layer co-extrusion of which the base material layer (intermediate layer) is fabricated by side-feeding the inorganic powder (such as titanium dioxide, calcium carbonate, etc.) into a double-screw extruder with air-drawing. Said patents do not use the prefabricated inorganic powder master-batch (M₁B) but use the cheaper inorganic powder to cut down the material cost, though said patents have been put into practice and have accomplished their phase goal.

However, said two patents, in terms of the goal of improving the output, have suffered a limited efficiency even if the scale of the extruder has been increased; the main reason is that the inorganic powder is unsteady at dispersion while blended with polypropylene under increasing the production rate of the extruder, which causes a shorter period of changing the filter screen of the extruder and affects the production efficiency. Consequently, it is more difficult to reach the goal of improving the output of extruder design.

In terms of improving the yield and production rate of the extruder, there are usually two approaches: one is to increase the rotation speed to increase extruded quantity/unit time, and the other one is to expand the scale of the extruder. The inorganic powder is normally treated with surface management to obtain better dispersion. Nevertheless, since the inorganic powder is too irregular to be well surface-treated to affect its dispersion. Even dispersed by the screw of the extruder for a long time, the inorganic powder still obstructs the filter screen, which makes a frequent changing of the filter screen to affect the production. In addition, the inorganic powder does not actually stay in the extruder for a long time enough to disperse due to the increased rotation speed of the extruder or the increased scale of the extruder to improve the output thereby, which can not refrain from the frequent changing of filter screen so as to affect the production.

On the other hand, the specific gravity of the pearly synthetic paper product is also a significant factor affecting the cost. The control of the specific gravity of the pearly synthetic paper mainly depends on the addition of inorganic powder and on the pores produced at the stage of orientation; the more the added inorganic powder, the lower the product specific gravity and the product cost per unit area; so, the amount of added inorganic powder decides the product cost. However, the improvement of the extruder output can not be accomplished by adding a large amount of inorganic powder due to its poor dispersion capability.

### SUMMARY OF THE PRESENT INVENTION

Therefore, in order to increase the rotation speed and expanding the scale of the extruder and to meet the requirement of the dispersion capability of inorganic powder to reach the goal of adding a larger amount of it, the applicant prefabricate the inorganic powder into master-batch (M₁B) with 0.1 ∼ 10 µm diameter to meet the requirement of dispersion capability; meanwhile, during the manufacturing process, not the dispersion but the blending with polypropylene is executed, which tremendously prolongs the changing period of the filter screen and prevents the extruded laminate sheet from producing pores which would otherwise cause air spots on the product to affect the productivity; in addition, a double-screw extruder is used to increase the blending effect to make the production rate of the extruder easier to improve.

Said increasing the rotation speed of the extruder and so on is primarily applied to the base material layer of the 3-layer co-extruded manufacturing process; the base material layer is fabricated by using inorganic powder master-batch (M₁B) with 0.1 ∼ 10 µm diameter, and by increasing the rotation speed of the double-screw extruder with air-drawing device or by expanding the equipment scale.

On the other hand, the compositions of the upper layer and the lower layer (the paper surface layer or the resin layer) are fabricated by using the single-screw extruder (which is cheaper) coordinated with a hopper air-drawing device since these two layers only need a certain amount of inorganic powder to meet the required ratio for printing use, which is different to the base material layer's requiring a great amount of addition due to the consideration of cost; therefore, a single-screw extruder of which the equipment price is lower is selected and is coordinated with a hopper air-drawing device.

One aspect of this invention is to provide a manufacturing method for improving the production output and the production rate of a pearly synthetic paper which key technique is to prefabricate the inorganic powder into a master-batch (M₁B) with 0.1 ∼ 10 µm diameter. In addition, the inorganic powder is merely blended with polypropylene (primary raw material) to reach the required dispersion in advance so as to improve the problem of manufacturing process of conventional pearly synthetic paper of which the extruded sheet from the extruder has pores and air spots structure caused by the moist inorganic powder or the heat-volatilized gas produced from the surface treatment agent which would otherwise affect the product quality, the production output and the production rate.

Another aspect of this invention is to innovate in using an inorganic master-batch (M₁B) which is prefabricated and has a better dispersion property not only largely to lengthen the using period of the filter screen of the extruder but also to resolve the problem of probably causing an abnormal production due to stopping the operation of production line for replacing the filter screen. While the extruder is being operated under a status of the maximum rotating speed and the maximum extrusion output, the inorganic powder master-batch (M₁B) with 0.1 ∼ 10 µm diameter of the present invention which has in advance fulfilled the dispersion requirement is able to effectively improve, incorporated with a design of air-drawing device and an increased blending effect of a double-screw, up to two times the production output and the production rate of the biaxial-oriented polypropylene pearly synthetic paper.

Further aspect of this invention is the method of this present invention can be applied to manufacture the biaxial-oriented polypropylene pearly synthetic paper product with a thickness of 25 ∼ 250 µm by using the plastic polypropylene material added with inorganic powder to proceed with paper-like improvement and by using 3-layer co-extrusion method. Therefore, the yield and production rate of this kind product are effectively improved, and also the quality and the price of this product are much closer to those paper product made of natural wood. The present invention can be widely applied to a variety of products such as cultural papers.

### BRIEF DESCRIPTION OF THE DRAWINGS

In order to describe advantages of the present invention more in detail, the drawing figures are briefly described as follows:

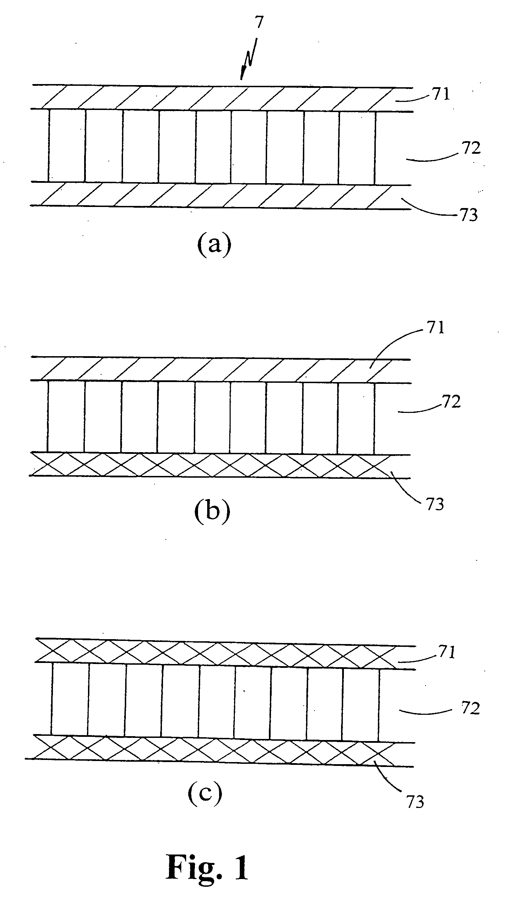

Fig. 1 has three structure drawings of the 3-layer co-extruded biaxial-oriented polypropylene (BOPP) pearly synthetic paper with 25 ∼ 250 µm of the present invention, wherein
   (a) is a structure drawing of the two-sided paper surface pearly synthetic paper, of which the upper layer is the paper surface layer (71)/the intermediate layer is the foamed intermediate layer (72)/the lower layer is the paper surface layer (73);
   (b) is a structure drawing of the single-sided paper surface pearly synthetic paper, of which the upper layer is the paper surface layer (71)/the intermediate layer is the foamed intermediate layer (72)/the lower layer is the resin layer (73);
   (c) is a structure drawing of the two-sided super-bright surface pearly synthetic paper, of which the upper layer is the resin layer (71)/the intermediate layer is the foamed intermediate layer (72)/the lower layer is the resin layer (73).

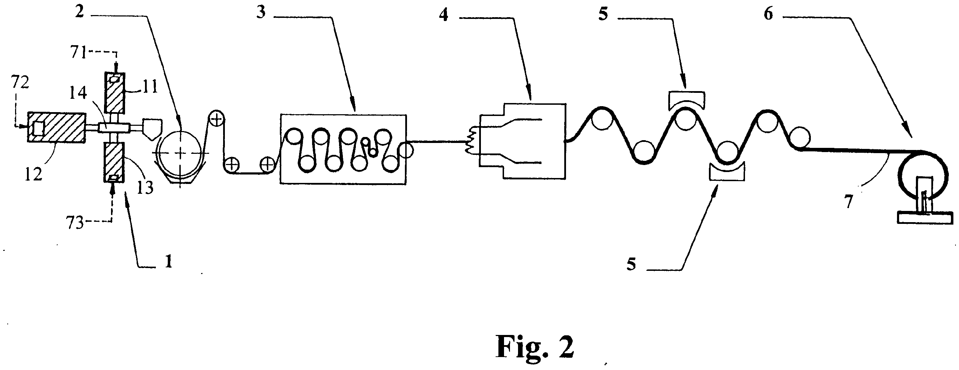

Fig. 2 is a manufacturing equipment drawing of the 3-layer co-extruded biaxial-oriented pearly synthetic paper of the present invention comprising, in accordance with manufacturing procedure, the extruder device (1), the cooling/shaping device (2), the longitudinal orientation device (3), the transverse orientation device (4), the corona discharge treatment device (5), and the rolling device (6).

### DETAILED DESCRITION OF THIS INVENTION AND THE PREFERRED EMBODIMENTS

In order to make the technical contents of the present invention be easily understood, an improved manufacturing method for producing a product with a thickness of 25 ∼ 250 µm and a specific gravity of 0.45 ∼ 0.90 by using a polypropylene resin composition and a manufacturing process (comprising extrusion, 3-layer co-extrusion, cooling/shaping, biaxial orientation, corona discharge treatment, and rolling) to accomplish a high output of pearly synthetic paper is described as following.

Referring to Fig.1, the product (7) of high productivity manufactured by the method of the pearly synthetic paper of the present invention is a biaxial-oriented layer-laminated product having a three-layer structure (comprising an upper layer, one or more than one layer of intermediate layer, and a lower layer), of which the foamed intermediate layer, the production thereof being tremendously increased, is fabricated by evenly stirring a composition comprising 93 ∼ 36 % by weight of polypropylene, 0 ∼ 5 % by weight of antistatic agent, 5 ∼ 35 % by weight of calcium carbonate master-batch (M₁B 40 ∼ 70 %), 2 ∼ 20 % by weight of titanium dioxide master-batch (M₁B 30 ∼ 60 %), 0 ∼ 4 % by weight of ultraviolet rays absorbing agent in the feeder which is at the front end of the double-screw primary extruder (12) having an air-drawing device, further blending the composition with the screw of the double-screw primary extruder (12) and air-drawing, then extruding the composition to the middle path of T-type die (14).

In addition, the upper and the lower paper surface layer or resin layer are fabricated by evenly stirring a composition comprising 93 ∼ 20 % by weight of polypropylene, 0 ∼ 30 % by weight of polyethylene resin, 5 ∼ 30 % by weight of calcium carbonate master-batch (M₁B 40 ∼ 70 %), 2 ∼ 15 % by weight of titanium dioxide master-batch (M₁B 30 ∼ 60 %), and 0 ∼ 5 % by weight of ultraviolet rays absorbing agent in the feeder which is at the front ends of the two single-screw primary extruders (11) having hopper air-drawing device, further blending the composition with the screw of the single-screw primary extruder (11) and air-drawing, then extruding the composition to the upper and lower paths of T-type die (14).

Referring to Fig. 2, said evenly stirred compositions of the resin layer or paper surface layer (71), the foamed intermediated layer (72), and the resin layer or paper surface layer (73) are separately extruded into the upper, the middle, and the lower paths of the T-type die (14) of the extruder device (1) to proceed with co-extruded molding to form a 3-layer resin composition, and further driven out from the outlet of T-type die thereafter and through a cooling/shaping device (2), a longitudinal orientation device (3), a transverse orientation device (4), a corona discharge treatment device (5), and a rolling device (6) to obtain a layer-laminated pearly synthetic paper, with a 3-layer structure, of which the productivity can be improved to more than two times as much.

The pearly synthetic paper of the present invention uses polypropylene material, based on years of experience of the applicant, due to its specification being easy to control and no limitation on use; in addition, the molecular weight of polypropylene distributes relatively wider and the melt flow index (MFI) thereof is between 3.0 ∼ 3.5 where is easiest to proceed with high speed production.

The polyethylene resin of 0.1 ∼ 7 MFI is selected by the present invention, which makes the manufactured pearly synthetic paper have an appropriate strengthening, an effect of paper-like, and an excellent paper surface roughness, printing quality, and ink receptivity.

Meanwhile, since the pearly synthetic paper of the present invention has an excellent whiteness, opacity, and effect of decreasing specific gravity, an inorganic powder master-batch used by the present invention is selected individually or plurally from calcium carbonate, titanium dioxide, diatomaceous earth, clay, calcium oxide, silicon dioxide, or barium sulfate of which the surface is first treated and then fabricated into a master-batch (M₁B) of which the diameter can be selected from 0.1 ∼ 10 u and of which the kind and the amount used are according to the required physical property of the pearly synthetic paper product.

The antistatic agent selected by the present invention is the one that is normally selected by biaxial-oriented polypropylene (BOPP); however, the antistatic agent of high temperature resistance type can furthermore improve the static resistance quality of the pearly synthetic paper of the present invention.

The reason which makes the present invention have a high yield is related to the raw material composition, and in addition the integral coordination of process equipment is significant as well, which is even more critical particularly for the thickness distribution and production steadiness of thick (thickness > 150 µm) and low specific gravity (specific gravity ≦ 0.7) products. The coordinated process devices and procedures of the polypropylene pearly synthetic paper of this present invention are described as follows:

Referring to Fig.2, the manufacturing equipment of the pearly synthetic paper of the present invention comprises, according to manufacturing procedure, an extruder device (1), a cooling/shaping device (2), a longitudinal orientation device (3), a transverse orientation device (4), a corona discharge treatment device (5), and a rolling device (6).

The extruder device (1) is assembled by two single-screw secondary extruder having a hopper air-drawing device ( or double-screw extruder having a sleeve air-drawing device ) (11) (13) and one double-screw primary extruder having a sleeve air-drawing device (12), each of which is respectively assembled with a T-type die (14). The working temperature of the extruder device (1), which is set according to the selected material and production speed, is normally set within the range of 180 degree C ∼ 280 degree C.

The composition material of the paper surface layer or the resin layer (71) (73) of the present invention is provided into the single-screw secondary extruder (or double-screw extruder having a sleeve air-drawing device) (11) (13), then evenly stirred in the feeder which is at the front end of the single-screw secondary extruder (11) (13), further blended by the screw of the single-screw secondary extruder (11) (13), then extruded to the upper and the lower paths of T-type die (14).

The composition material of the foamed intermediate layer (72) of the present invention is provided into the double-screw primary extruder (12), then evenly stirred in the feeder which is at the front end of the double-screw primary extruder (12), further blended by the double-screw of the double-screw primary extruder (12) and air-drawn, then extruded to the middle path of T-type die (14).

The composition materials of the paper surface layer or the resin layer(71), the foamed intermediate layer (72), and the paper surface layer or the resin layer (73) are respectively and simultaneously put into the single-screw secondary extruder (11), the double-screw primary extruder (12), and the single-screw secondary extruder (13), then are together extruded into and converged in T-type die (14) to proceed with co-extrusion to be molded to a 3-layer resin composition, and further driven out from the outlet of T-type die (14) of the extruder device (1).

The cooling/shaping device (2) has a cooling roller and a water basin, of which the working temperature is set up to be an appropriate one according to the thickness and crystallization requirement of the layer-laminated sheet of the product, and the production speed. Said working temperature is normally kept between 15 degree C ∼ 70 degree C so as to cool down the 3-layer resin composition which is molded and extruded at a temperature of between 180 degree C ∼ 280 degree C. The 3-layer resin composition is shaped to a 3-layer-laminated sheet after being cooled down.

The longitudinal orientation device (3) preheats the cooled and shaped 3-layer-laminated sheet one more time, of which the working temperature is set up in accordance with the requirement of the thickness of the fabricated layer-laminated sheet, the production speed, the composition material and specific gravity, and the orientation ratio. Said working temperature is normally kept between 110 degree C ∼150 degree C so as to fix the shape of the cooled 3-layer-laminated sheet after procedures of preheating, orienting, and tempering. After being oriented by the longitudinal orientation device (3), the cooled and shaped 3-layer-laminated sheet can normally be longitudinally oriented to 3 ∼ 6 times of orientation ratio.

The transverse orientation device (4) preheats the 3-layer-laminated sheet which has been longitudinally oriented by the longitudinal orientation device (3) once more, of which the working temperature is set up in accordance with the requirement of the thickness of the fabricated layer-laminated sheet, the production speed, the composition material and specific gravity, and the orientation ratio. Said working temperature is normally kept between 140 degree C ∼190 degree C so as to again fix the shape of the longitudinally oriented 3-layer-laminated sheet after procedures of preheating, orienting, and tempering. After being oriented by the transverse orientation device (3), the longitudinally oriented 3-layer-laminated sheet can normally be transversely oriented to 5 ∼ 13 times of orientation ratio; then through tempering and cooling/fixing, a pearly synthetic paper product of the present invention is obtained.

The corona discharge treatment device (5) treats the shape-fixed pearly synthetic paper with a power of 20 ∼ 120 KW of high frequency wave corona discharge to make the shape-fixed pearly synthetic paper have an excellent and even surface tension which consequently makes the pearly synthetic paper have marvelously receptivity to ink or gold foil while proceeded with gravure printing, surface printing, lithographic printing, screen printing, or gilding printing.

The rolling device (6) rolls up the pearly synthetic paper ( which has been treated with corona discharge) having a width of 8 M under an appropriate control of tension to have the pearly synthetic paper product prevent bound groove or bad spreading problems from happening.

The comparison of filter screen changing periods at different output between the present invention (which uses said raw material-primarily the inorganic powder master-batch (M₁B) and said manufacturing equipment (primarily the double-screw primary extruder with air-drawing device and two sets of single-screw extruder with hopper air-drawing device)) and US Patent No. 6,001,290 granted to applicant are listed as the following table:

| | The filter screen changing period at 1 Ton/Hr of output | The filter screen changing period at 2 Ton/Hr of output | The filter screen changing period at 3 Ton/Hr of output | The filter screen changing period at 4 Ton/Hr of output |
|---|---|---|---|---|
| The present invention (using the inorganic powder master-batch) | Over 100 Hrs | About 72 Hrs | About 48 Hrs | About 32 Hrs |
| US Patent No. 6,001,290 (using the inorganic powder) | About 32 Hrs | About 16 Hrs | About 8 Hrs | Less than 2 Hrs |

The following examples are given as preferred embodiments to illustrate characteristics (industrial applicability, innovation, and improvement) of the present invention but not to limit the invention.

### Example 1

### (The preferred embodiment is a double-sided paper surface pearly synthetic paper, with a thickness of 80µm, used for print paper of book internal pages.)

Two compositions, each of which comprising 40 % by weight of polypropylene (MFI: 3.2), 20 % by weight of polyethylene (MFI: 0.5), 10 % by weight of titanium dioxide master-batch (M₁B 50 %), 28 % by weight of calcium carbonate master-batch (M₁B 60 %), and 2 % by weight of ultraviolet rays absorbing agent, are respectively and evenly stirred in the feeders which are at the front ends of the two single-screw secondary extruders (11) (13) having a hopper air-drawing device, further fed into and blended by the screws of the two single-screw secondary extruders (11) (13) respectively, then respectively extruded to the upper path and lower path of T-type die (14);

In addition, a composition, comprising 70 % by weight of polypropylene (MFI: 3.0), 5 % by weight of titanium dioxide master-batch (M₁B 50 %), 23 % by weight of calcium carbonate master-batch (M₁B 60 %), and 2 % by weight of antistatic agent, is evenly stirred in the feeder which is at the front end of the double-screw primary extruder (12) having a sleeve air-drawing device, further fed into and blended by the screw of the double-screw primary extruder (12) and air-drawn, then extruded to the middle path of T-type die (14);

Under the condition that the working temperature of the extruder device (1) being set at the range of 180 degree C ∼ 280 degree C, said three composition materials are, in the T-type die (14), co-extruded and molded to a 3-layer-laminated composition: the upper layer being the paper surface layer or the resin layer (71), the middle layer being the foamed intermediate layer (72), and the lower layer being the paper surface layer or the resin layer (73); then further driven out from the outlet of T-type die (14) into the cooling/shaping device (2) of which the cooling roller is set at a temperature of 35 degree C and the water of the water basin is set at a temperature of 30 degree C., thereby the 3-layer-laminated composition with a high temperature is cooled down and shaped to a 3-layer-laminated sheet; then led into the longitudinal orientation device (3) to be first preheated at a temperature of 120 degree C ∼ 130 degree C to be softened and then oriented by the longitudinal orientation device (3) with 5.3 times of longitudinal orientation ratio and tempered to fix the shape; thereafter, the 3-layer-laminated sheet which has been longitudinally oriented is further led to the transverse orientation device (4) to be preheated at a temperature of 145 degree C ∼ 185 degree C to be softened once more and then oriented to 8 times of transverse orientation ratio and then tempered and cooled/fixed to a 3-layer co-extruded biaxial-oriented pearly synthetic paper (with a thickness of 80 µm ) used for in-mold integrally molding; after being cooled down at a temperature of 25 degree C, the pearly synthetic paper is led to the corona discharge treatment device (5) to be treated with high frequency wave corona discharge to make the pearly synthetic paper have an even surface tension; finally, the product of the 3-layer co-extruded biaxial-oriented pearly synthetic paper (7) is rolled up by the rolling device (6) to obtain the lithographic print paper with a thickness of 80 µm which can be applied to book internal pages.

The physical property of the pearly synthetic paper of the preferred embodiment is listed as Table 1.

**Table 1**

| Physical property item | Unit | The preferred embodiment (80 µm double-sided paper surface pearly synthetic paper) | Testing method |
|---|---|---|---|
| Specific gravity | -- | 0.70 | ASTM D 1248 |
| Basic weight | g/m² | 56.0 | JIS P-8124 |
| Opacity | % | 87 | TAPPI T-425 |
| Brightness | % | 20/20 | TAPPI T-480 |
| Roughness | % | 2.2 | TAPPI T-555 |
| Whiteness | % | 97 | TAPPI T-525 |
| Surface resistance | Ω | 10¹² | EN 45014 |

### Example 2

### (The preferred embodiment is a single-sided paper surface pearly synthetic paper, with a thickness of 170µm, used for print paper of book cover pages, hand bags, etc.)

A composition, comprising 40 % by weight of polypropylene (MFI: 3.2), 25 % by weight of polyethylene (MFI: 0.5), 5 % by weight of titanium dioxide master-batch (M₁B 50 %), 28 % by weight of calcium carbonate master-batch (M₁B 60 %), and 2 % by weight of ultraviolet rays absorbing agent, is evenly stirred in the feeder which is at the front end of the single-screw secondary extruder (11) having a hopper air-drawing device, further fed into and blended by the screw of the single-screw secondary extruder (11), then extruded to the upper path of T-type die (14);

Another composition, comprising 98 % by weight of polypropylene (MFI: 3.2), and 2 % by weight of ultraviolet rays absorbing agent, is evenly stirred in the feeder which is at the front end of the single-screw secondary extruder (13) having a hopper air-drawing device, further fed into and blended by the screw of the single-screw secondary extruder (13), then extruded to the lower path of T-type die (14);

In addition, a composition, comprising 73 % by weight of polypropylene (MFI : 3.0 ), 5 % by weight of titanium dioxide master-batch (M₁B 50 %), 20 % by weight of calcium carbonate master-batch (M₁B 60 %), and 2 % by weight of antistatic agent, is evenly stirred in the feeder which is at the front end of the double-screw primary extruder (12) having a sleeve air-drawing device, further fed into and blended by the screw of the double-screw primary extruder (12) and air-drawn, then extruded to the middle path of T-type die (14);

Under the condition that the working temperature of the extruder device (1) being set at the range of 180 degree C ∼ 280 degree C, said three composition materials are, in the T-type die (14), co-extruded and molded to a 3-layer-laminated composition: the upper layer being the paper surface layer or the resin layer (71), the middle layer being the foamed intermediate layer (72), and the lower layer being the paper surface layer or the resin layer (73); then further driven out from the outlet of T-type die (14) into the cooling/shaping device (2) of which the cooling roller is set at a temperature of 35 degree C and the water of the water basin is set at a temperature of 30 degree C, thereby the 3-layer-laminated composition with a high temperature is cooled down and shaped to a 3-layer-laminated sheet; then led into the longitudinal orientation device (3) to be first preheated at a temperature of 120 degree C ∼ 130 degree C to be softened and then oriented by the longitudinal orientation device (3) with 5.3 times of longitudinal orientation ratio and tempered to fix the shape; thereafter, the 3-layer-laminated sheet which has been longitudinally oriented is further led to the transverse orientation device (4) to be preheated at a temperature of 145 degree C ∼ 185 degree C to be softened once more and then oriented to 8 times of transverse orientation ratio and then tempered and cooled/fixed to a 3-layer co-extruded biaxial-oriented pearly synthetic paper (with a thickness of 170 µm ) used for in-mold integrally molding; after being cooled down at a temperature of 25 degree C, the pearly synthetic paper is led to the corona discharge treatment device (5) to be treated with high frequency wave corona discharge to make the pearly synthetic paper have an even surface tension; finally, the product of the 3-layer co-extruded biaxial-oriented pearly synthetic paper (7) is rolled up by the rolling device (6) to obtain the print paper with a thickness of 170 µm which can be applied to book cover pages.

The physical property of the pearly synthetic paper of the preferred embodiment is listed as Table 2.

**Table 2**

| Physical property item | Unit | The preferred embodiment (170 µm single-sided paper surface pearly synthetic paper) | Testing method |
|---|---|---|---|
| Specific gravity | -- | 0.60 | ASTM D 1248 |
| Basic weight | g/m² | 102.0 | JIS P-8124 |
| Opacity | % | 95 | TAPPI T-425 |
| Brightness | % | 20/108 | TAPPI T-480 |
| Roughness | % | 1.9 | TAPPI T-555 |
| Whiteness | % | 96 | TAPPI T-525 |
| Surface resistance | Ω | 10¹² | EN 45014 |

### Example 3

### (The preferred embodiment is a double-sided bright surface pearly synthetic paper, with a thickness of 170µm, used for ink-coated base paper.)

Two compositions, each of which comprising 98 % by weight of polypropylene (MFI: 3.2), and 2 % by weight of ultraviolet rays absorbing agent, are respectively and evenly stirred in the feeders which are at the front ends of the two single-screw secondary extruders (11) (13) having a hopper air-drawing device, further fed into and blended by the screws of the two single-screw secondary extruders (11) (13) respectively, then respectively extruded to the upper path and lower path of T-type die (14);

In addition, a composition, comprising 70 % by weight of polypropylene (MFI: 3.0), 5 % by weight of titanium dioxide master-batch (M₁B 50 %), 23 % by weight of calcium carbonate master-batch (M₁B 60 %), and 2 % by weight of antistatic agent, is evenly stirred in the feeder which is at the front end of the double-screw primary extruder (12) having a sleeve air-drawing device, further fed into and blended by the screw of the double-screw primary extruder (12) and air-drawn, then extruded to the middle path of T-type die (14);

Under the condition that the working temperature of the extruder device (1) being set at the range of 180 degree C ∼ 280 degree C, said three composition materials are, in the T-type die (14), co-extruded and molded to a 3-layer-laminated composition: the upper layer being the paper surface layer or the resin layer (71), the middle layer being the foamed intermediate layer (72), and the lower layer being the paper surface layer or the resin layer (73); then further driven out from the outlet of T-type die (14) into the cooling/shaping device (2) of which the cooling roller is set at a temperature of 35 degree C and the water of the water basin is set at a temperature of 30.degree C, thereby the 3-layer-laminated composition with a high temperature is cooled down and shaped to a 3-layer-laminated sheet; then led into the longitudinal orientation device (3) to be first preheated at a temperature of 120 degree C ∼ 130 degree C to be softened and then oriented by the longitudinal orientation device (3) with 5.3 times of longitudinal orientation ratio and tempered to fix the shape; thereafter, the 3-layer-laminated sheet which has been longitudinally oriented is further led to the transverse orientation device (4) to be preheated at a temperature of 145 degree C ∼ 185 degree C to be softened once more and then oriented to 8 times of transverse orientation ratio and then tempered and cooled/fixed to a 3-layer co-extruded biaxial-oriented pearly synthetic paper (with a thickness of 80 µm ) used for in-mold integrally molding; after being cooled down at a temperature of 25 degree C, the pearly synthetic paper is led to the corona discharge treatment device (5) to be treated with high frequency wave corona discharge to make the pearly synthetic paper have an even surface tension; finally, the product of the 3-layer co-extruded biaxial-oriented pearly synthetic paper (7) is rolled up by the rolling device (6) to obtain the base paper with a thickness of 170 µm which can be applied to ink-coating.

The physical property of the pearly synthetic paper of the preferred embodiment is listed as Table 3.

**Table 3**

| Physical property item | Unit | The preferred embodiment (170 µm double-sided bright surface pearly synthetic paper) | Testing method |
|---|---|---|---|
| Specific gravity | -- | 0.68 | ASTM D 1248 |
| Basic weight | g/m² | 115.6 | JIS P-8124 |
| Opacity | % | 94 | TAPPI T-425 |
| Brightness | % | 117/118 | TAPPI T-480 |
| Roughness | % | 0.8 | TAPPI T-555 |
| Whiteness | % | 88 | TAPPI T-525 |
| Surface resistance | Ω | 10¹³ | EN 45014 |

## Claims

1. A manufacturing method for improving the yield and production rate of a biaxial-oriented polypropylene pearly synthetic paper, which prefabricates the inorganic powder into a master-batch (M₁B) in the manufacturing process of the pearly synthetic paper and said inorganic powder is merely blended with polypropylene (primary raw material) to reach the required dispersion in advance; **characterised in that** the manufacturing method comprises the following procedures:
(1) two compositions, each of which comprising 93 ∼ 20 % by weight of polypropylene, 0 ∼ 30 % by weight of polyethylene, 5 ∼ 30 % by weight of calcium carbonate master-batch (40 ∼ 70 %), 2 ∼ 15 % by weight of titanium dioxide master-batch (M₁B 30 ∼ 60 %), and 0 ∼ 5 % by weight of ultraviolet rays absorbing agent, are respectively and evenly stirred in the feeders which are at the front ends of the two single-screw secondary extruders, further fed into and blended by the screws of the two single-screw secondary extruders respectively, then continuously and respectively extruded to the upper path and lower path of T-type die;
(2) in addition, a composition, comprising 93 ∼ 36 % by weight of polypropylene, 0 ∼ 5 % by weight of antistatic agent, 5 ∼ 35 % by weight of calcium carbonate master-batch (M₁B 40 ∼ 70 %), 2 ∼ 20% by weight of titanium dioxide master-batch (M₁B 30 ∼ 60 %), and 0 ∼ 4 % by weight of ultraviolet rays absorbing agent, is evenly stirred in the feeder which is at the front end of the other double-screw primary extruder, further fed into and blended by the screw of the double-screw primary extruder, then continuously extruded to the middle path of T-type die;
(3) under the condition that the working temperature of the extruder device being set at the range of 180 degree C ∼ 280 degree C, said three composition materials are, in the T-type die, co-extruded and molded to a 3-layer-laminated composition with a thickness of 25 ∼ 250 µm having the upper and the lower layers being the resin layer or the paper surface layer, and the middle layer being the foamed intermediate layer; then further driven out from the outlet of T-type die into the cooling/shaping device;
(4) under a temperature of 15 degree C ∼ 70 degree C, the cooling/shaping device cools down and shapes the 3-layer-laminated composition into a 3-layer-laminated sheet, then leads it to a longitudinal orientation device;
(5) the longitudinal orientation device first preheats and soften the 3-layer-laminated sheet at a temperature of 110 degree C ∼ 150 degree C and then orients it with 3 ∼ 6 times of longitudinal orientation ratio and tempers to fix the shape; thereafter, the 3-layer-laminated sheet is further led to the transverse orientation device;
(6) the transverse orientation device again preheats and softens the 3-layer-laminated sheet which has been longitudinally oriented at a temperature of 140 degree C ∼ 190 degree C and then orients it with 5 ∼ 13 times of transverse orientation ratio and tempers to fix the shape; thereafter, the 3-layer-laminated sheet which has been longitudinally and transversely biaxial-oriented is further cooled down at a temperature of 25 degree C and led to a corona discharge treatment device;
(7) the corona discharge treatment device treats the longitudinally and transversely biaxial-oriented 3-layer-laminated sheet with a power of 20 ∼ 120 KW of high frequency wave corona discharge to make the pearly synthetic paper have an even surface tension to compose a 3-layer co-extruded biaxial-oriented pearly synthetic paper with upper and lower layers being resin layer or paper surface layer and middle layer being foamed intermediate layer; and
(8) the rolling device rolls up the manufactured 3-layer co-extruded biaxial-oriented pearly synthetic paper.

2. The manufacturing method for improving the yield and production rate of a biaxial-oriented polypropylene pearly synthetic paper as defined in claim 1, **characterised in that** the single-screw second extruder has an air-drawing device and the double-screw primary extruder has a sleeve air-drawing device.

3. The manufacturing method for improving the yield and production rate of a biaxial-oriented polypropylene pearly synthetic paper as defined in claim 1, **characterised in that** the inorganic powder which is first surface treated and then prefabricated into a master-batch (M₁B) is selected from calcium carbonate, titanium dioxide, diatomaceous earth, clay, calcium oxide, silicon dioxide, or barium sulfate.

4. The manufacturing method for improving the yield and production rate of a biaxial-oriented polypropylene pearly synthetic paper as defined in claim 2, **characterised in that** the prefabricated inorganic master-batch (M₁B) is made of two or more the following materials of calcium carbonate, titanium dioxide, diatomaceous earth, clay, calcium oxide, silicon dioxide, or barium sulfate.

5. The manufacturing method for improving the yield and production rate of a biaxial-oriented polypropylene pearly synthetic paper as defined in claim 3 or claim 4, **characterised in that** the diameter of the master-batch (M₁B) prefabricated from inorganic powder is 0.1 ∼ 10 µm
